# EUROPÄISCHE PATENTSCHRIFT

(11) **EP 2 384 913 B1**
(45) Veröffentlichungstag und Bekanntmachung des Hinweises auf die Patenterteilung: **17.10.2012**
(21) Anmeldenummer: 10004759.6
(22) Anmeldetag: 05.05.2010
(51) Int. Cl.: B60D 1/62, B60D 5/00, B61D 17/20

(54) **Mittelbügelsystem für ein Gelenkfahrzeug**
Bracket system for an articulated vehicle
Système de cintre moyen pour un véhicule articulé

(43) Veröffentlichungstag der Anmeldung: 09.11.2011
(73) Patentinhaber: ATG Autotechnik GmbH, 22962 Siek (DE)
(72) Erfinder: Browne, Denis B., 22946 Trittau (DE)
(74) Vertreter: Glawe, Delfs, Moll

(56) Entgegenhaltungen:
- WO-A1-91/02672
- CH-A- 363 896
- DE-A1- 2 854 416
- DE-A1- 3 545 863
- DE-A1- 10 238 110
- DE-C1- 19 714 543
- DE-U1-202007 001 525

## Beschreibung

Die Erfindung betrifft ein Mittelbügelsystem für ein Gelenkfahrzeug. Das Gelenkfahrzeug umfasst einen Vorderwagen und einen Hinterwagen, die durch ein Fahrzeuggelenk miteinander verbunden sind. Es besteht ein Durchgang zwischen dem Vorderwagen und dem Hinterwagen, der von dem Mittelbügel umschlossen ist. Das Mittelbügelsystem umfasst ein Kabel; das sich entlang eines geschwungenen Wegs zwischen dem Vorderwagen und dem Hinterwagen erstreckt. Das Kabel ist oberhalb des Durchgangs angeordnet. Es ist ein Lager zwischen dem Kabel und dem Mittelbügel vorgesehen.

Solche Mittelbügelsysteme kommen beispielsweise in Gelenkbussen zum Einsatz, in denen während der Fahrt ein Übergang der Passagiere zwischen dem Vorderwagen und dem Hinterwagen möglich ist. Um die Passagiere vor Umgebungseinflüssen zu schützen, ist zwischen dem Vorderwagen und dem Hinterwagen normalerweise ein Faltenbalg vorgesehen, der das Fahrzeuggelenk umgibt.

In diesen Gelenkfahrzeugen gibt es technische Funktionen, die sowohl den Vorderwagen als auch den Hinterwagen betreffen. Betätigt beispielsweise der im Vorderwagen sitzende Fahrer den Lichtschalter, so soll dies dazu führen, dass ein Rücklicht des Hinterwagens leuchtet. Um dies zu ermöglichen, erstreckt sich ein elektrisches Kabel vom Vorderwagen über den Zwischenraum hinweg bis zum Hinterwagen. Weitere Funktionen erfordern Hydraulikleitungen, Luftschläuche und sonstige Versorgungsleitungen zwischen dem Vorderwagen und dem Hinterwagen.

In Niederflurfahrzeugen, bei denen der für die Passagiere bestimmte Boden möglichst tief angeordnet ist, bleibt unterhalb des Durchgangs, der den Vorderwagen und den Hinterwagen verbindet, nur wenig Platz. Mehr Platz steht oberhalb des Durchgangs zur Verfügung, weswegen die Kabel häufig dort geführt sind.

Der Erfindung liegt ausgehend von diesem Stand der Technik die Aufgabe zu Grunde, ein Mittelbügelsystem mit einer verbesserten Lagerung der Kabel vorzustellen. Die Aufgabe wird gelöst durch die Merkmale des Anspruchs 1. Erfindungsgemäß weist das Lager eine Führungsfläche auf. Die Führungsfläche erlaubt eine Relativbewegung in Längsrichtung des Fahrzeugs zwischen dem Kabel und dem Mittelbügel. Vorteilhafte Ausführungsformen finden sich in den Unteransprüchen.

Zunächst werden einige Begriffe erläutert. Kabel im Sinne der vorliegenden Erfindung dienen dazu, technische Funktionen des Vorderwagens und des Hinterwagens miteinander zu verknüpfen. Der Begriff Kabel umfasst alle Versorgungsleitungen, über die Signale oder Kräfte zwischen dem Vorderwagen und dem Hinterwagen übertragen werden. Vom Begriff Kabel umfasst sind insbesondere elektrische Kabel, Glasfaserleitungen, Hydraulikleitungen, Luftschläuche für Klimaanlage und Heizung. Meistens erstreckt sich eine Mehrzahl solcher Kabel zwischen dem Vorderwagen und dem Hinterwagen. Die erfindungsgemäße Lagerung kann alle oder einen Teil dieser Kabel erfassen.

Der Begriff Lager besagt, dass die Kabelführung und der Mittelbügel sich nicht frei relativ zueinander bewegen können. In zumindest einer Richtung ist die Bewegungsfreiheit zwischen der Kabelführung und dem Mittelbügel durch das Lager eingeschränkt. Die Relativbewegung findet parallel zu der Führungsfläche des Lagers statt. Eine Relativbewegung zwischen dem Kabel und dem Mittelbügel ist zumindest in Längsrichtung des Fahrzeugs möglich, sie kann zusätzlich in anderen Richtungen möglich sein. Die Längsrichtung des Fahrzeugs schließt mit dem Mittelbügel einen rechten Winkel ein.

Die Bewegungen, die im Betrieb des Gelenkfahrzeugs zwischen dem Vorderwagen und dem Hinterwagen stattfinden, sind komplex. Sie umfassen Drehen, Nicken, Wanken sowie Kombinationen daraus. Die Bewegungen, die die Kabel und der Mittelbügel im Zwischenraum zwischen dem Vorderwagen und dem Hinterwagen vollführen, sind dabei nicht zwangsläufig synchron. Wenn die Kabel starr mit dem Mittelbügel verbunden sind oder wie in der EP 0 897 337 , die auch den Oberbegriff des Anspruchs 1 zeigt, Relativbewegungen nur parallel zum Mittelbügel zugelassen werden, besteht die Gefahr, dass die Kabel oder der Mittelbügel zu unnötigen Bewegungen gezwungen werden. Ist gemäß der Erfindung eine Relativbewegung in Längsrichtung des Fahrzeugs möglich, werden nur in geringerem Umfang Kräfte zwischen dem Mittelbügel und dem Kabel übertragen und diese Komponenten sind einer geringeren Belastung ausgesetzt.

Das Lager kann so gestaltet sein, dass es außer der Relativbewegung in Längsrichtung des Fahrzeugs auch eine Relativbewegung in Querrichtung des Fahrzeugs zulässt. Die Übertragung von Kräften zwischen dem Mittelbügel und dem Kabel sowie erzwungene Bewegungen dieser beiden Komponenten werden dadurch weiter vermindert.

Von der Erfindung umfasst sind sowohl Ausführungsformen, bei denen die Führungsfläche mit dem Mittelbügel verbunden ist, als auch Ausführungsformen, bei denen die Führungsfläche mit dem Kabel verbunden ist. Das Gegenstück des Lagers ist an der jeweils anderen Komponente angebracht. Das Gegenstück des Lagers kann auf der Führungsfläche gleiten. Die Oberfläche des Gegenstücks kann dazu aus einem gleitgünstigen Material bestehen oder mit einer gleitgünstigen Beschichtung versehen sein. In einer vorteilhaften Ausführungsform umfasst das Gegenstück eine Kugel, die auf der Führungsfläche läuft.

Die Führungsfläche kann eben sein. Die ebene Führungsfläche kann horizontal ausgerichtet sein. Die Relativbewegung zwischen dem Mittelbügel und dem Kabel in Längsrichtung des Fahrzeugs findet dann statt ohne eine gleichzeitige Relativbewegung in vertikaler Richtung. Umfasst sind auch Ausführungsformen, bei denen die Führungsfläche gewölbt ist. Je nach Stellung des Gegenstücks auf der Führungsfläche findet dann eine kombinierte Relativbewegung in horizontaler und in vertikaler Richtung statt. Eine Komponente der möglichen Relativbewegung ist in Längsrichtung des Fahrzeugs ausgerichtet.

Das Gegenstück kann frei auf der Führungsfläche aufliegen und zum Beispiel nur durch die Gewichtskraft auf der Führungsfläche gehalten sein. Wenn man die Gewichtskraft überwindet, kann das Gegenstück bei dieser Ausführungsform von der Führungsfläche abgehoben werden. Es kann ein die Führungsfläche begrenzender Rand vorgesehen sein, so dass das Gegenstück nicht von der Führungsfläche herunter springen kann. Zur Erfindung gehören auch Ausführungsformen, bei denen in vertikaler Richtung eine definierte Führung des Gegenstücks auf der Führungsfläche vorgesehen ist. Beispielsweise kann das Gegenstück zwischen zwei sich gegenüberliegenden und parallel zueinander ausgerichteten Führungsflächen geführt sein. Das Gegenstück kann dann weder von der einen noch von der anderen Führungsfläche abgehoben werden.

Um Bewegungen zwischen dem Vorderwagen und dem Hinterwagen aufnehmen zu können, nimmt das Kabel einen geschwungenen Weg im Zwischenraum zwischen dem Vorderwagen und dem Hinterwagen. Um die Deckenhöhe im Durchgang nicht unnötig einzuschränken, sollte sich der kurvenförmige Weg im Wesentlichen in einer horizontalen Ebene erstrecken. In einer vorteilhaften Ausführungsform ist eine Kabelführung vorgesehen, an der sich der Weg des Kabels im Zwischenraum zwischen dem Vorderwagen und dem Hinterwagen orientieren kann. Die Kabelführung hat vorzugsweise eine feste Länge. Die Kabelführung kann beispielsweise eine Blattfeder umfassen, die am Vorderwagen und am Hinterwagen befestigt ist und die im Zwischenraum im Wesentlichen den gleichen Weg wie das Kabel nimmt. Als Blattfeder wird ein lang gestrecktes Element bezeichnet, das sich quer zu seiner Längsrichtung in einer Richtung leicht elastisch verformen lässt und in einer anderen Richtung schwerer elastisch verformen lässt. Möglich ist es auch, dass die Kabelführung starre Lenkstangen umfasst, die in geeigneter Weise an Gelenken aufgehängt sind, so dass sie Bewegungen zwischen dem Vorderwagen und dem Hinterwagen aufnehmen können.

Bei einigen Gelenkfahrzeugen ist der Mittelbügel so geführt, dass er immer eine mittige Stellung zwischen dem Vorderwagen und dem Hinterwagen einnimmt. Mit einem solchen Mittelbügel kann die erfindungsgemäße Lagerung für das Kabel ohne weiteres verwendet werden. Möglich ist auch eine Verwendung mit Mittelbügeln, die im Betrieb des Gelenkfahrzeugs nicht auf eine mittige Position zwischen dem Vorderwagen und dem Hinterwagen festgelegt sind. Beispielsweise kann der Mittelbügel mittels einer Lenkstange in einem festen Abstand zu dem Vorderwagen oder dem Hinterwagen gehalten sein. Die Lenkstange kann an dem Mittelbügel angelenkt sein und eine Drehung des Mittelbügels um eine senkrechte Achse erlauben. Wenn der Mittelbügel durch eine solche Lenkstange in einem festen Abstand zu einem der Wagen gehalten wird, werden Nickbewegungen durch eine Relativbewegung zwischen dem Mittelbügel und dem anderen Wagen ausgeglichen.

Statt eines vollständig starren Lenkers kann auch eine Verbindung vorgesehen sein, die gegenüber Druckkräften starr ist, die sich aber unter Zugkräften verlängern lässt. Wenn das Gelenkfahrzeug über eine Kuppe fährt und sich der Abstand zwischen dem Vorderwagens und dem Hinterwagen im oberen Bereich deswegen vergrößert, kann der Mittelbügel sich von dem Wagen, zu dem die Verbindung besteht, entfernen und dadurch dazu beitragen, den Abstand zu überbrücken. Der Abstand zwischen dem Mittelbügel und dem Vorderwagen oder Hinterwagen, den die Lenkstange im Normalzustand definiert, ist dann zugleich der Mindestabstand. Hingegen kann der Abstand durch Zugkraft vergrößert werden.

Die Erfindung wird nachfolgend unter Bezugnahme auf die beigefügten Zeichnungen anhand vorteilhafter Ausführungsformen beschrieben. Es zeigen:
- Fig. 1:: eine Seitenansicht eines Gelenkfahrzeugs;
- Fig. 2:: eine perspektivische Ansicht eines erfindungsgemäßen Mittelbügelsystems;
- Fig. 3:: eine schematische Ansicht von oben auf ein erfindungsgemäßes Mittelbügelsystem;
- Fig. 4:: einen Schnitt entlang Linie I - I in Fig. 3;
- Fig. 5:: die Ansicht aus Fig. 3 bei einer anderen Ausführungsform der Erfindung;
- Fig. 6:: einen Schnitt entlang Linie II - II in Fig. 5;
- Fig. 7:: eine Ansicht von oben auf eine erfindungsgemäße Kabelführung; und
- Fig. 8:: die Ansicht aus Fig. 7 bei einer anderen Ausführungsform der Erfindung.

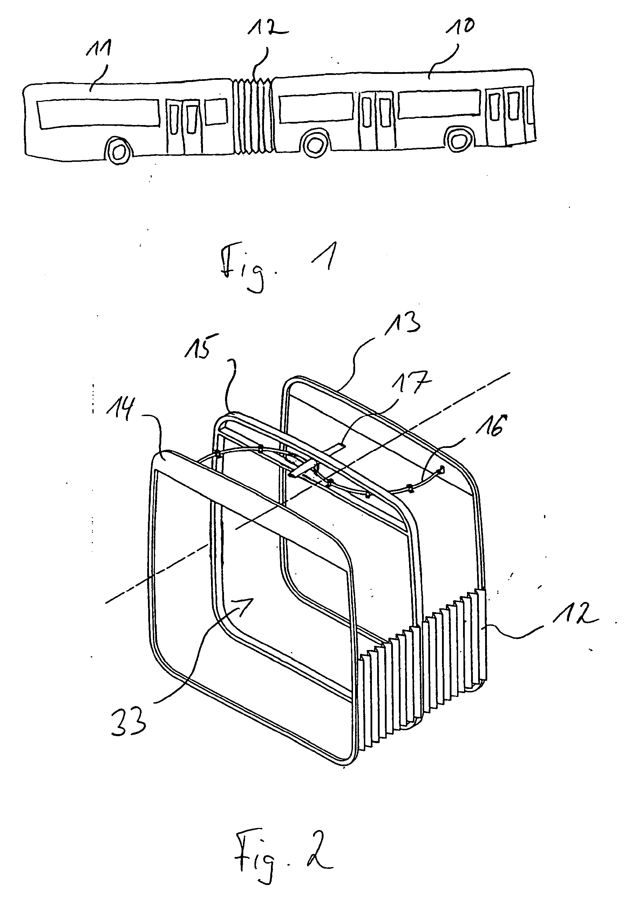

Ein in Fig. 1 gezeigter Gelenkbus umfasst einen Vorderwagens 10 und einen Hinterwagen 11. Der Vorderwagen 10 und der Hinterwagen 11 sind über ein in Fig. 1 nicht dargestelltes Fahrzeuggelenk derart miteinander verbunden, dass Passagiere während der Fahrt durch einen Durchgang 33 hindurch zwischen dem Vorderwagen 10 und dem Hinterwagen 11 wechseln können. Ein Faltenbalg 12 umgibt das Fahrzeuggelenk und den Durchgang 33. Das erfindungsgemäße Mittelbügelsystem ist im Zwischenraum zwischen dem Vorderwagens 10 und dem Hinterwagen 11 angeordnet und in Fig. 1 durch den Faltenbalg 12 verdeckt.

Fig. 2 zeigt den Endrahmen 13 des Vorderwagens 10 und den Endrahmen 14 des Hinterwagens 11. Der Faltenbalg 12 ist in Fig. 2 nur ausschnittsweise gezeigt. Zwischen dem Endrahmen 13 und dem Endrahmen 14 ist ein Mittelbügel 15 angeordnet, der dem Faltenbalg 12 zusätzlichen Halt vermittelt. Ein Kabel 16 erstreckt sich vom Endrahmen 13 zum Endrahmen 14. Das Kabel 16 nimmt im Zwischenraum zwischen dem Vorderwagens 10 und dem Hinterwagen 11 einen geschwungenen Weg, der sich im Wesentlichen in einer horizontalen Ebene erstreckt. Das Kabel 16 ist dadurch in der Lage, Bewegungen, die der Vorderwagens 10 und der Hinterwagen 11 relativ zueinander vollführen, auszugleichen. Am Mittelbügel 15 ist das Kabel 16 in einer Schiebeführung 17 gelagert. In der Schiebeführung 17 kann sich das Kabel 16 entlang einer Führungsfläche in Längsrichtung des Fahrzeugs relativ zu dem Mittelbügel 15 bewegen. Außerdem ist auch eine Rotation des Kabels 16 relativ zu der Schiebeführung 17 möglich. Mit der Schiebeführung 17 wird auf eine Zwangsführung zwischen dem Kabel 16 und dem Mittelbügel 15 verzichtet. Das Kabel 16 und der Mittelbügel 15 können unabhängig voneinander die Position einnehmen, in der sie der geringsten Belastung ausgesetzt sind.

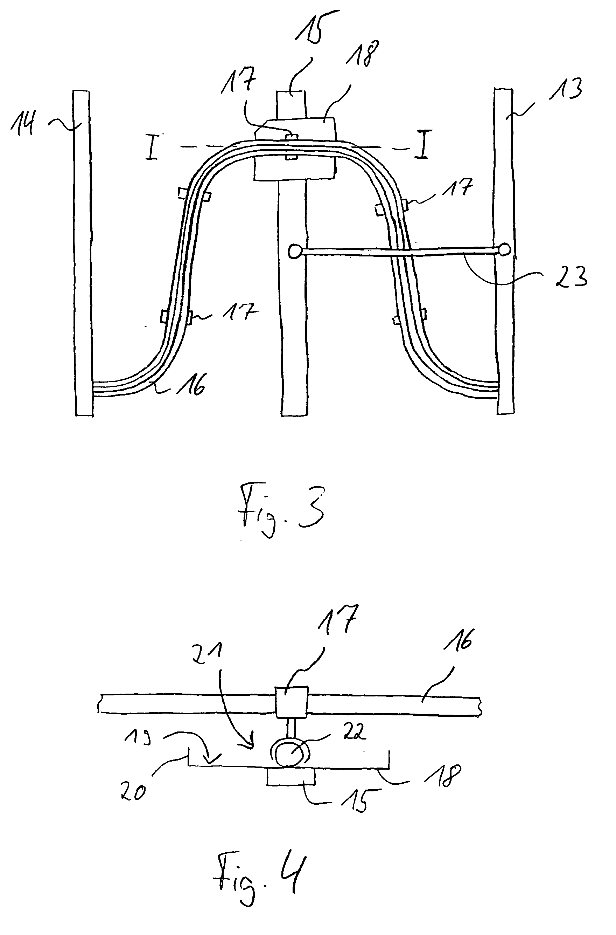

Bei der Ausführungsform der Fig. 3 erstreckt sich eine Mehrzahl von Kabeln 16 zwischen dem Endrahmen 13 und dem Endrahmen 14. Die Kabel 16 werden durch geeignete Klammern 17 in einer horizontalen Ebene parallel zueinander gehalten, so dass sie sich in Form eines einheitlichen Strangs durch den Zwischenraum zwischen dem Endrahmen 13 und dem Endrahmen 14 erstrecken.

Die Kabel 16 sind an dem Mittelbügel 15 mittels einer Führungsfläche 19 und einem mit der Führungsfläche 19 zusammenwirkenden Gegenstück 21 gelagert. Die Führungsfläche 19 wird gebildet von dem Boden einer Lagerwanne 18. Das Gegenstück 21 wird gebildet von einer Kugel 22, die an einer Klammer 17 der Kabel 16 geführt ist. Wenn der Mittelbügel 15 und die Kabel 16 sich relativ zueinander bewegen, rollt die Kugel 22 auf der Führungsfläche 19. Die Kabel 16 und der Mittelbügel 15 können sich also unabhängig voneinander so bewegen, dass sie den geringsten Kräften ausgesetzt sind. Die Freiheit zu Relativbewegungen besteht sowohl in Längsrichtung als auch in Querrichtung des Fahrzeugs.

Die Kugel 22 liegt alleine aufgrund der Gewichtskraft der Kabel 16 auf der Führungsfläche 19 auf. Wenn man die Gewichtskraft überwindet, kann die Kugel 22 ohne weiteres von der Führungsfläche 19 abgehoben werden. Es kann nicht ausgeschlossen werden, dass auch bei einer Fahrt auf unebener Strecke oder sonstigen Erschütterungen die Kugel 22 von der Führungsfläche 19 abgehoben wird. Für die Funktionsfähigkeit des erfindungsgemäßen Mittelbügelsystems ist dies unschädlich, weil die Führungsfläche 19 so groß ist, dass sie den gesamten Bereich überdeckt, in dem die Kugel 22 sich normalerweise bewegen kann. Auch wenn die Kugel 22 abgehoben wird, landet sie also wieder auf der Führungsfläche 19. Um trotzdem zusätzlichen Schutz davor zu bieten, dass die Kugel 22 von der Führungsfläche 19 herunter springt, ist die Führungsfläche 19 ringsherum mit einem Rand 20 umgeben.

Der Mittelbügel 15 ist bei dieser Ausführungsform über eine starre Lenkstange 23 mit dem Endrahmen 13 verbunden. Sowohl mit dem Endrahmen 13 als auch mit dem Mittelbügel 15 ist die Lenkstange 23 über einen Gelenke verbunden, das Schwenkbewegungen um eine senkrechte Gelenkachse zulässt. Wenn der Gelenkbus also um eine Kurve fährt und in seitliche Richtung einknickt, kann der Mittelbügel 15 die entsprechende Schwenkbewegung nachvollziehen, so dass er permanent ungefähr eine Mittelposition zwischen dem Endrahmen 13 und dem Endrahmen 14 einnimmt. Fährt der Gelenkbus hingegen über eine Kuppe, so wird die entsprechende Nickbewegung nur zwischen dem Mittelbügel 15 und dem Endrahmen 14 ausgeglichen. Der Abstand zwischen dem Endrahmen 13 und dem Mittelbügel 15 bleibt aufgrund der Lenkstange 23 konstant. Bei Nickbewegungen ist der Mittelbügel 15 also nicht in einer Mittelposition zwischen dem Endrahmen 13 und dem Endrahmen 14.

Wenn eine Lenkstange 23 vorgesehen ist, bewegt sich die Kugel 22 nicht in die in Fig. 3 oben links dargestellte Ecke der Lagerwanne 18. An dieser Ecke ist die Lagerwanne 18 deswegen abgeschrägt, es fehlt also ein Stück im Vergleich zur Rechteckform.

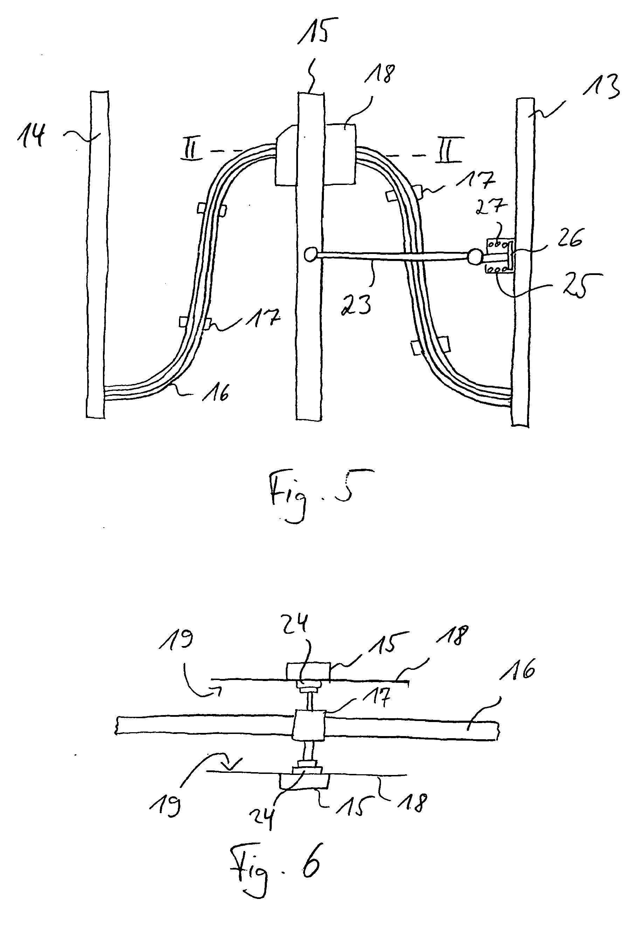

Bei der Ausführungsform der Fig. 5 sind die Kabel 16 zwischen zwei Querstangen des Mittelbügels 15 geführt. An jeder der Querstangen ist eine Lagerwanne 18 angebracht. Die Führungsflächen 19 der Lagerwannen 18 liegen sich parallel gegenüber, so dass die Kabel 16 zwischen zwei Führungsflächen 19 eingeschlossen sind. An der Klammer 17 der Kabel 16 sind Gleitstücke 24 angebracht, die auf den Führungsflächen 19 gleiten und dadurch eine Relativbewegung zwischen den Kabeln 16 und dem Mittelbügel 15 erlauben. Bei dieser Ausführungsform unterliegt das Kabel 16 in vertikaler Richtung einer definierten Führung. Ein umlaufender Rand für die Führungsflächen 19 ist nicht erforderlich.

Zwischen dem Mittelbügel 15 und dem Endrahmen 13 erstreckt sich auch hier eine Lenkstange 23. An beiden Enden der Lenkstange 23 sind Gelenke ausgebildet, die Schwenkbewegungen um eine senkrechte Gelenkachse erlauben. Die Lenkstange 23 ist nicht starr, sondern über ein Federelement 25 mit dem Endrahmen 13 verbunden. Das Federelement 25 umfasst einen in einer Schale geführten Stempel 26, der durch eine Feder 27 gegen den Endrahmen 13 gedrückt wird. Es ist also nicht möglich, den Abstand zwischen dem Mittelbügel 15 und dem Endrahmen 13 durch Druckkräfte auf die Lenkstange 23 zu verringern. Wirkt hingegen eine Zugkraft auf die Lenkstange 23, kann dadurch die Feder 27 komprimiert werden und der Stempel 26 herausgezogen werden. Indem der Mittelbügel 15 sich auf diese Weise in Richtung des Endrahmens 14 bewegen kann, wird eine Überdehnung des Faltenbalgs 12 zwischen dem Mittelbügel 15 und dem Endrahmen 14 vermieden.

Bei den bisher beschriebenen Ausführungsformen werden die Kabel 16 durch Klammern 17 zu einem Strang zusammengehalten. Darüber hinaus sind keine weiteren Maßnahmen zur Stabilisierung der Kabel 16 vorgesehen. Der Weg, den die Kabel 16 im Zwischenraum zwischen dem Vorderwagen 10 und dem Hinterwagen 11 nehmen, bestimmt sich allein aus der Eigenstabilität der Kabel 16.

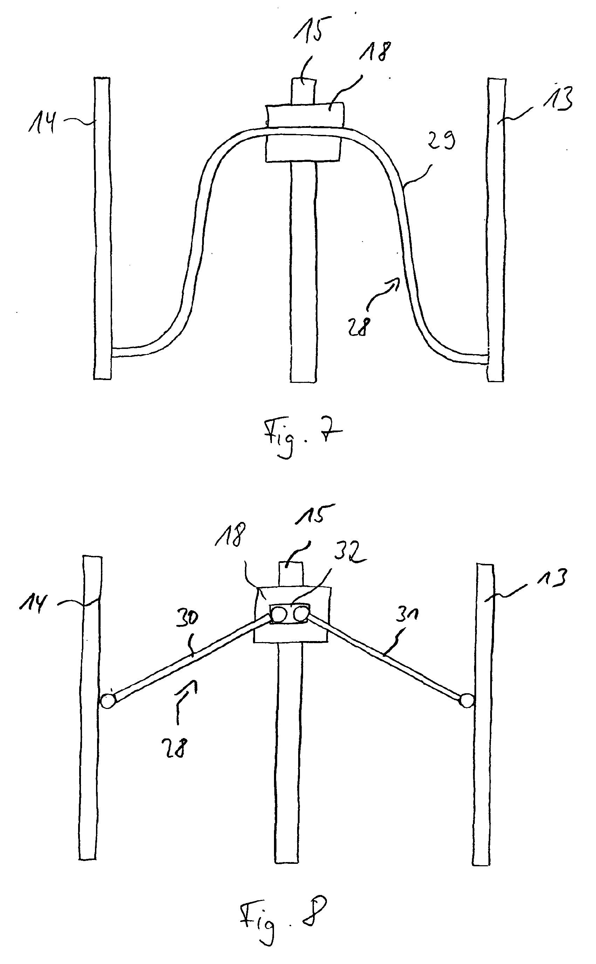

Bei anderen Ausführungsformen, wie sie in den Figuren 7 und 8 beispielhaft dargestellt sind, ist eine zusätzliche Kabelführung 28 vorgesehen. Die Kabel selbst, die von der Kabelführung 28 gehalten sind, sind der besseren Übersichtlichkeit halber in den Figuren 7 und 8 nicht dargestellt. In Fig. 7 wird die Kabelführung 28 von einer Blattfeder 29 gebildet. Die Blattfeder 29 erstreckt sich entlang eines geschwungenen Weg durch den Zwischenraum zwischen dem Endrahmen 13 und dem Endrahmen 14. Im Bereich des Mittelbügels 15 ist ein Lager-Gegenstück mit der Blattfeder 29 verbunden, das mit der Führungsfläche 19 der Lagerwanne 18 zusammen wird. Bei dieser Ausführungsform sind also nicht die Kabel direkt, sondern die Kabelführung 28, die die Kabel erhält, in der Führungsfläche 19 gelagert. In Fig. 8 umfasst die Kabelführung 28 zwei Lenkstangen 30, 31. Die Lenkstangen 30, 31 erstrecken sich von den Endrahmen 13, 14 bis zu einem oberhalb des Mittelbügels angeordneten Block 32. Der Block 32 bildet das Lager-Gegenstück, das auf der Führungsfläche 19 der Lagerwanne 18 geführt ist.

## Patentansprüche

1. Mittelbügelsystem für ein zwischen einem Vorderwagen (10) und einem Hinterwagen (11) eines Fahrzeug angeordnetes, einen Durchgang (33) zwischen dem Vorderwagen (10) und dem Hinterwagen (11) bildendes Fahrzeuggelenk, umfassend ein sich entlang eines geschwungenen Wegs im Zwischenvanm zwischen dem Vorderwagen (10) und dem Hinterwagen (11) erstreckendes Kabel (16), wobei der Mittelbügel (15) den Durchgang (33) umschließt und wobei das Kabel (16) oberhalb des Durchgangs (33) angeordnet ist und wobei ein Lager (19, 21, 24) zwischen dem Kabel (16) und dem Mittelbügel (15) vorgesehen ist, **dadurch gekennzeichnet, dass** das Lager (19, 21, 24) eine Führungsfläche (19) aufweist und dass die Führungsfläche (19) eine Relativbewegung in Längsrichtung des Fahrzeugs zwischen dem Kabel (16) und dem Mittelbügel (15) erlaubt.

2. Mittelbügelsystem nach Anspruch 1, **dadurch gekennzeichnet, dass** das Lager (19, 21, 24) eine Relativbewegung in Querrichtung des Fahrzeugs zwischen dem Kabel (16) und dem Mittelbügel (15) erlaubt.

3. Mittelbügelsystem nach Anspruch 1 oder 2, **dadurch gekennzeichnet, dass** das Lager (19, 21, 24) eine auf der Führungsfläche (19) laufende Kugel (22) umfasst.

4. Mittelbügelsystem nach einem der Ansprüche 1 bis 3, **dadurch gekennzeichnet, dass** das Lager (19, 21, 24) in vertikaler Richtung eine definierte Führung bietet.

5. Mittelbügelsystem nach einem der Ansprüche 1 bis 4, **dadurch gekennzeichnet, dass** die Führungsfläche (19) mit einem umlaufenden Rand (20) versehen ist.

6. Mittelbügelsystem nach einem der Ansprüche 1 bis 5, **dadurch gekennzeichnet, dass** eine sich zwischen dem Vorderwagen (10) und dem Hinterwagen (11) erstreckende Kabelführung (28) vorgesehen ist, an der das Kabel (16) befestigt ist.

7. Mittelbügelsystem nach Anspruch 6, **dadurch gekennzeichnet, dass** die Kabelführung (28) einen Weg fester Länge zwischen dem Vorderwagen (10) und dem Hinterwagen (11) definiert.

8. Mittelbügelsystem nach Anspruch 7, **dadurch gekennzeichnet, dass** die Kabelführung (28) eine Blattfeder (29) umfasst.

9. Mittelbügelsystem nach einem der Ansprüche 1 bis 8, **dadurch gekennzeichnet, dass** eine Lenkstange (23) vorgesehen ist, die an dem Mittelbügel (15) angelenkt ist und eine Drehung des Mittelbügels (15) um eine senkrechte Achse erlaubt, wobei die Lenkstange (23) eine Verbindung zum Vorderwagen (10) oder zum Hinterwagen (11) herstellt.

10. Mittelbügelsystem nach Anspruch 9, **dadurch gekennzeichnet, dass** der Abstand zwischen dem Mittelbügel (15) und dem Vorderwagen (10) oder Hinterwagen (11), den die Lenkstange (23) im Normalzustand definiert, zugleich der Mindestabstand ist.

11. Mittelbügelsystem nach Anspruch 9 oder 10, **dadurch gekennzeichnet, dass** der Abstand zwischen dem Mittelbügel (15) und dem Vorderwagen (10) oder Hinterwagen (11), den die Lenkstange (23) im Normalzustand definiert, durch Zugkraft vergrößert werden kann.

## Claims

1. Central hoop system for a vehicle articulation which is arranged between a front car (10) and a rear car (11) of a vehicle and forms a passage (33) between said front car (10) and said rear car (11), said system comprising a cable (16) which extends along a curved path in the intervening space between the front car (10) and the rear car (11), wherein the central hoop (15) encloses the passage (33) and wherein the cable (16) is arranged above the passage (33) and wherein a support (19, 21, 24) is provided between the cable (16) and the central hoop (15), **characterised in that** the support (19, 21, 24) has a guide surface (19) and that said guide surface (19) permits a relative movement in the longitudinal direction of the vehicle between the cable (16) and the central hoop (15).

2. Central hoop system according to claim 1, **characterised in that** the support (19, 21, 24) permits a relative movement in the transverse direction of the vehicle between the cable (16) and the central hoop (15).

3. Central hoop system according to claim 1 or 2, **characterised in that** the support (19, 21, 24) comprises a ball (22) that runs on the guide surface (19).

4. Central hoop system according to one of claims 1 to 3, **characterised in that** the support (19, 21, 24) offers defined guidance in the vertical direction.

5. Central hoop system according to one of claims 1 to 4, **characterised in that** the guide surface (19) is provided with a circumferential rim (20).

6. Central hoop system according to one of claims 1 to 5, **characterised in that** a cable guide (28) which extends between the front car (10) and the rear car (11) is provided, to which the cable (16) is fastened.

7. Central hoop system according to claim 6, **characterised in that** the cable guide (28) defines a path of fixed length between the front car (10) and the rear car (11).

8. Central hoop system according to claim 7, **characterised in that** the cable guide (28) comprises a leaf spring (29).

9. Central hoop system according to one of claims 1 to 8, **characterised in that** a connecting rod (23) is provided, which is articulated on the central hoop (15) and permits rotation of said central hoop (15) about a perpendicular axis, said tie rod (23) bringing about a connection to the front car (10) or to the rear car (11).

10. Central hoop system according to claim 9, **characterised in that** the distance between the central hoop (15) and the front car (10) or rear car (11), which distance is defined by the tie rod (23) in the normal condition, is, at the same time, the minimum distance.

11. Central hoop system according to claim 9 or 10, **characterised in that** the distance between the central hoop (15) and the front car (10) or rear car (11), which distance is defined by the tie rod (23) in the normal condition, can be increased by tractive force.

## Revendications

1. Système d'arceau central pour une articulation de véhicule disposée entre une caisse avant (10) et une caisse arrière (11) d'un véhicule et formant un passage (33) entre la caisse avant (10) et la caisse arrière (11), comprenant un câble (16) s'étendant suivant un chemin courbe dans l'espace intermédiaire entre la caisse avant (10) et la caisse arrière (11), dans lequel l'arceau central (15) entoure le passage (33), et dans lequel le câble (16) est disposé au-dessus du passage (33), et dans lequel un palier (19, 21, 24) est prévu entre le câble (16) et l'arceau central (15), **caractérisé en ce que** le palier (19, 21, 24) présente une surface de guidage (19), et **en ce que** la surface de guidage (19) permet un mouvement relatif dans la direction longitudinale du véhicule entre le câble (16) et l'arceau central (15).

2. Système d'arceau central selon la revendication 1, **caractérisé en ce que** le palier (19, 21, 24) permet un mouvement relatif dans la direction transversale du véhicule entre le câble (16) et l'arceau central (15).

3. Système d'arceau central selon la revendication 1 ou 2, **caractérisé en ce que** le palier (19, 21, 24) comprend une bille (22) roulant sur la surface de guidage (19).

4. Système d'arceau central selon l'une quelconque des revendications 1 à 3, **caractérisé en ce que** le palier (19, 21, 24) assure un guidage défini dans une direction verticale.

5. Système d'arceau central selon l'une quelconque des revendications 1 à 4, **caractérisé en ce que** la surface de guidage (19) est munie d'un bord périphérique (20).

6. Système d'arceau central selon l'une quelconque des revendications 1 à 5, **caractérisé en ce qu'**un circuit de câblage (28) s'étendant entre la caisse avant (10) et la caisse arrière (11) est prévu auquel est fixé le câble (16).

7. Système d'arceau central selon la revendication 6, **caractérisé en ce que** le circuit de câblage (28) définit un chemin de longueur fixe entre la caisse avant (10) et la caisse arrière (11).

8. Système d'arceau central selon la revendication 7, **caractérisé en ce que** le circuit de câblage (28) comprend un ressort à lames (29).

9. Système d'arceau central selon l'une quelconque des revendications 1 à 8, **caractérisé en ce qu'**une barre conductrice (23) est prévue qui est articulée au niveau de l'arceau central (15) et permet une rotation de l'arceau central (15) autour d'un axe vertical, dans lequel la barre conductrice (23) établit une liaison avec la caisse avant (10) ou avec la caisse arrière (11).

10. Système d'arceau central selon la revendication 9, **caractérisé en ce que** la distance entre l'arceau central (15) et la caisse avant (10) ou la caisse arrière (11), définie par la barre conductrice (23) à l'état normal, est en même temps la distance minimale.

11. Système d'arceau central selon la revendication 9 ou 10, **caractérisé en ce que** la distance entre l'arceau central (15) et la caisse avant (10) ou la caisse arrière (11), définie par la barre conductrice (23) à l'état normal, peut être augmentée par une force de traction.
